# EUROPEAN PATENT APPLICATION

(11) **EP 2 075 863 A1**
(43) Date of publication of application: **01.07.2009**
(21) Application number: 07301750.1
(22) Date of filing: 27.12.2007
(51) Int. Cl.: H01M 2/34, H02J 7/00

(54) **DC Supplier and device to be powered by the DC supplier**

(71) Applicant: Thomson Licensing, 92100 Boulogne-Billancourt (FR)
(72) Inventor: Liu, Shuang, 510000, GUANGZHOU (CN)
(74) Representative: Ruellan-Lemonnier, Brigitte

(57) **Abstract**

The present invention provides a device to be powered by a DC supplier, wherein said device comprises: a first pair of positive (212(1)) and negative (211) poles for connecting with a pair of corresponding positive (202) and negative (201) poles of the DC supplier in a first orientation, so as to be powered by the DC supplier; and at least one additional pole of positive (212(2)) or negative pole for combining with the first pair of positive (212(1)) and negative (211) poles in a centrosymmetric way, to connect with the pair of corresponding positive and negative poles by a second pair of positive and negative poles of the combined poles, in a second orientation opposite to the first orientation, so as to be powered by the DC supplier.

## Description

### FIELD OF THE INVENTION

The present invention relates to a DC supplier and device to be powered by the DC supplier, in particularly, to a battery, a device to be energized by the battery, a charger and a device to be charged by the charger.

### BACKGROUND OF THE INVENTION

Nowadays, various kinds of portable devices are very popular. Normally, there is a need of a DC adaptor for each such portable device which includes a DC battery resided therein for power supply. That DC adapter is operative as a battery charging system which converts AC power into DC power and charge the battery of the device.

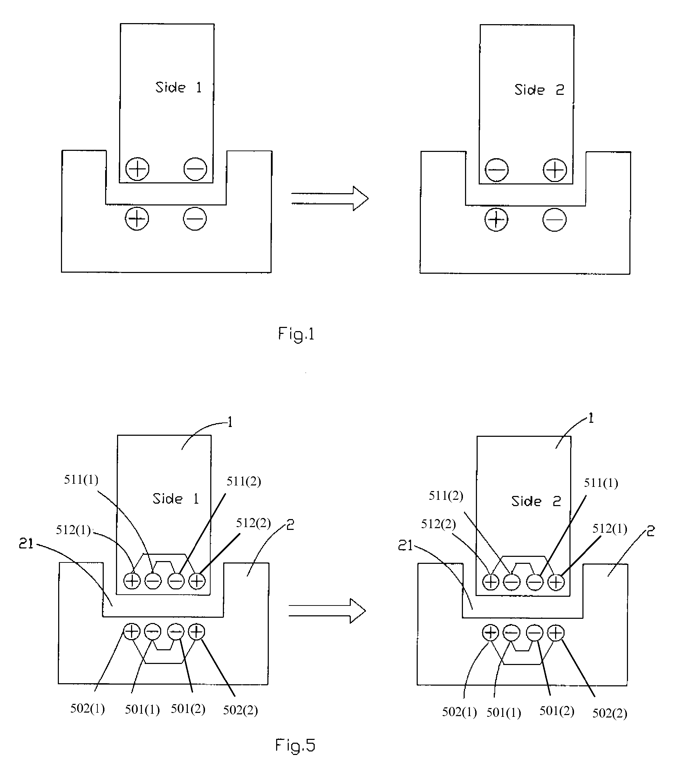

It is commonly known that for an adaptor, i.e. a battery charging system, there are one positive terminal and one negative terminal to be contacted with corresponding terminals of a device to be charged. The adaptor and the device to be charged must be contacted in correct electronic polarities, i.e. the positive terminal of the adaptor must contact with the positive terminal of the device, and the negative terminal of the adaptor must contact with the negative one of the device. The DC power can be fed from the adaptor to the device only when the poles are connected in correct polarity, that is to say the two-polar contacting cannot be reversed, otherwise the battery charging system or even the device to be charged may be destroyed, as shown in Fig. 1, the correct contacting at the left side can not be reversed into the wrong contact as shown at the right side.

Normally, the device to be charged is indicated to be inserted to a charging slot of the adaptor in only one orientation in order to ensure the correct electronic polarity. In this situation, however, only one side of the device can face user while it's charging. For many devices, there are different function keys or displays respectively located on both sides, therefore, if sometimes a user wants to operate or view one side at this moment, and another side at another moment, there exists a need for convenient use of both sides while still keep the correct contacting of the poles.

Another example of demand of correct electronic polarity is in the battery energizing system, for instance, those devices use Lithium batteries, which normally has an indication for orientation of electronics contacting. However, these kinds of indication may not be distinguishable enough for some people to recognize and follow the instruction. Sometimes, damage to the device or the battery occurs when a connection of wrong polarity was made.

US patent No. 5103155 disclosed a battery charging system including an electronic polarity sensing, monitoring and alarm circuit and a special polarity reversing relay connected between two pairs of booster cables. When one of the pairs of cables is connected to a voltage source and the other pair of cables is connected to a battery to be charged, the circuit and relay automatically connect the source and battery with the correct polarity, even if the battery being charged has a very low voltage across it. However, this solution is costly due to additional components and circuits.

Accordingly, it is desired for a simple and economic solution which solve the foregoing obstacles and defeats in prior art. The present invention addresses these and/or other issues.

### SUMMARY OF THE INVENTION

An object of the invention is to provide a DC supplier and a powered device which can connect with each other in two different orientations by the positive and negative poles thereof.

According to one aspect of the present invention, a device to be powered by a DC supplier, wherein said device comprises: a first pair of positive and negative poles for connecting with a pair of corresponding positive and negative poles of the DC supplier in a first orientation, so as to be powered by the DC supplier; and at least one additional pole of positive or negative pole for combining with the first pair of positive and negative poles in a centrosymmetric way, to connect with the pair of corresponding positive and negative poles by a second pair of positive and negative poles of the combined poles, in a second orientation opposite to the first orientation, so as to be powered by the DC supplier.

Advantageously, said DC supplier and said powered device are able to be connected in correct polarity with said device being reversible, which is a very simple solution and cost very low.

According to an embodiment of the invention, the DC supplier is a charger, a battery, a DC adaptor and so on.

According to another aspect of the present invention, a DC supplier for supplying power to a powered device, wherein said supplier comprises: a first pair of positive and negative poles for connecting with a pair of corresponding positive and negative poles of the powered device in a first orientation, so as to supplying power to the powered device; and at least one additional pole of positive or negative pole for combining with the first pair of positive and negative poles in a centrosymmetric way, to connect with the pair of corresponding positive and the negative poles by a second pair of positive and negative poles of the combined poles, in a second orientation opposite to the first orientation, so as to supplying power to the powered device.

According to an embodiment of the invention, the powered device is portable device.

These and other advantages of the present invention will be apparent to those of ordinary skill in the art by reference to the following detailed description and the accompanying drawings.

### BRIEF DESCRIPTION OF DRAWINGS

Fig.1 is a schematic view of an example of prior art;
Fig.2a is a schematic view of a first embodiment of a charging system in accordance with the present invention
Fig.2b is a schematic view of a second embodiment of the charging system in accordance with the present invention;
Fig.3a is a schematic view of a third embodiment of the charging system in accordance with the present invention;
Fig.3b is a schematic view of a fourth embodiment of the charging system in accordance with the present invention;
Fig.4a is a schematic view of a fifth embodiment of the charging system in accordance with the present invention;
Fig.4b is a schematic view of a sixth embodiment of the charging system in accordance with the present invention; and
Fig. 5 is a schematic view of a seventh embodiment of the charging system in accordance with the present invention.

### DETAIL DESCRIPTION OF PREFERRED EMBODIMENTS

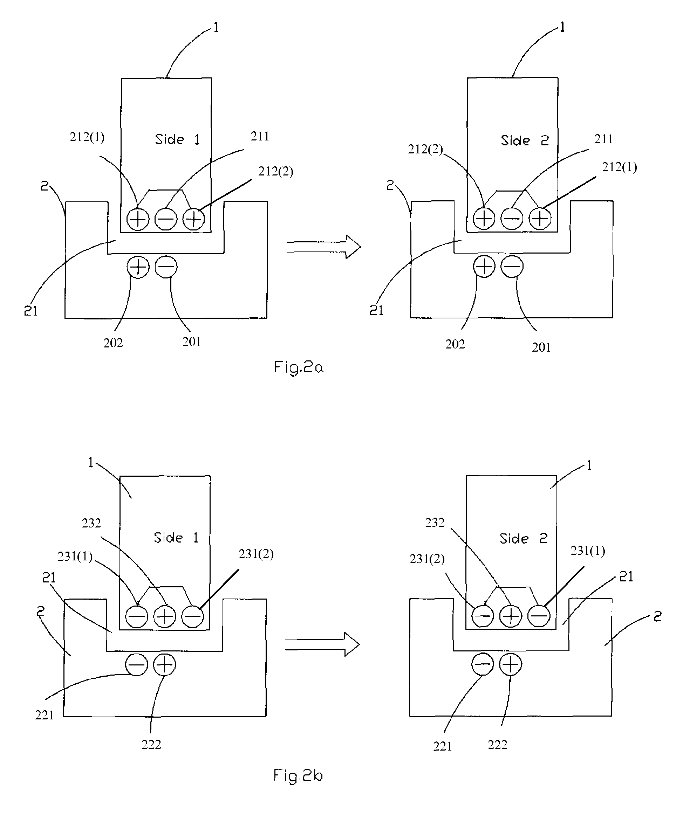

With reference to Fig.2a, a first preferred embodiment of a battery charging system in accordance with the present invention is shown. A device 1 to be charged can be reversibly inserted into a charger 2 with either one of its opposite two sides facing towards a user. The device 1 to be charged is, for example, any types of portable devices, such as a mobile phone, a MP3 player, a PDA and the likes. As shown in the left part of Fig.2a, the device 1 is inserted into the charger 2 in such a way that a first side of the device 1 is facing towards the user, therefore, functional keys/buttons or a display can be seen on the first side. In the right part of Fig.2a, the device 1 is inserted into the charger 2 in a way that a second side of the device 1 is facing towards the user, so that the functional key or buttons on the second side are available for the user.

As illustratively described in the example of Fig.2a, the device 1 comprises a first pair of negative pole 211 and positive pole 212(1) and additional one positive pole 212(2) provided at one end of the device 1, wherein the two positive poles 212(1),(2) can be electrically connected with each other. The negative pole 211 is positioned in the middle of the end of the device 1, and the two positive poles 212(1),(2) are symmetrically positioned in space at right and left sides of the negative pole 211, and in fact these three poles 211, 212(1),(2) are arranged in centrosymmetric way centred by the geometrical central axis of the end of the device 1. The charger 2 comprises a charging slot 21 for receiving of the device 1, wherein one negative electrical terminal 201 and one positive electrical terminal 202 are provided in the charging slot 21, in particular, the negative pole 201 is positioned in the middle of the slot 21 corresponding to the negative pole 211 of the device 1, and the positive pole 202 is positioned at the left side corresponding to the left one of the positive electrical terminals 212 of the device 1, and optionally at the right side corresponding to the right one of the positive electrical terminals 212 of the device 1. Whereby, when the device 1 is inserted into the charging slot 21 of the charger 2 in either one of the two orientations as shown in Fig.2a, the negative pole 201 of the charger 2 is always in electrical connection with the negative pole 211 of the device 1, and the positive pole 202 of the charger 2 is always in electrical connection with either one of the two positive poles 212(1),(2) of the device 1. Therefore, thanks to the arrangement of the poles of the device and the charger in the centrosymmetric way, a correct polarity for the connection is always ensured so as to enable the device 1 to be reversibly inserted into the charger 2 without any worry.

In a second preferred embodiment of the invention as shown in Fig.2b, which is different from the first embodiment is that the positive poles 232 is positioned in the middle of the first end of the device 1 instead of the negative poles 231, and consequently, the negative poles 231 are positioned at right and left sides of the positive pole 232 of the device 1. Correspondingly, the positive pole 222 is positioned in the middle of the charging slot 21 of the charger 2, and the negative pole 221 is positioned at the left side of the charging slot 21, and optionally at the right side of the charging slot 21.

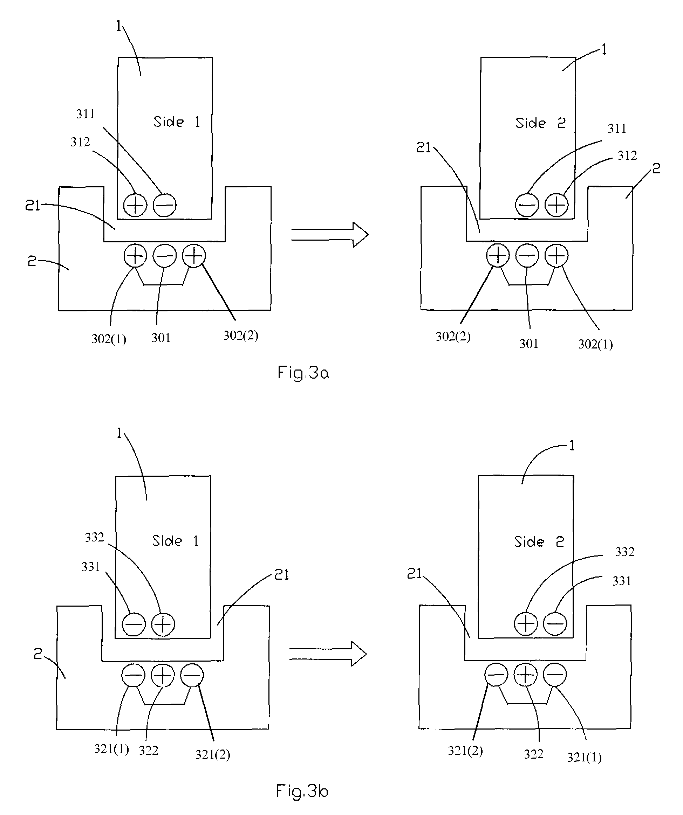

It is conceivable that, as a result of permutation and combination, other ways of arrangement of the polarities for the device 1 and the charger 2 are also applicable. As seen in Fig.3a, there are one negative pole 311 plus only one positive pole 312 provided at the first end of the device 1. Instead, one negative pole 301 and two positive poles 302 (1),(2) are provided in the charging slot 21 of the charger 2 in a centrosymmetric way centred by the geometrical centre axis of the charging slot 21 of the charger 2. The device 1 as illustrated in this example of Fig.3a can be reversibly inserted into the charging slot 21 of the charger 2 in a same principle as shown in Figs. 2a and 2b. Fig.3b illustrates another preferred embodiment of the present invention, which is only different from the example of the Fig.3a by reverse of the negative and positive poles.

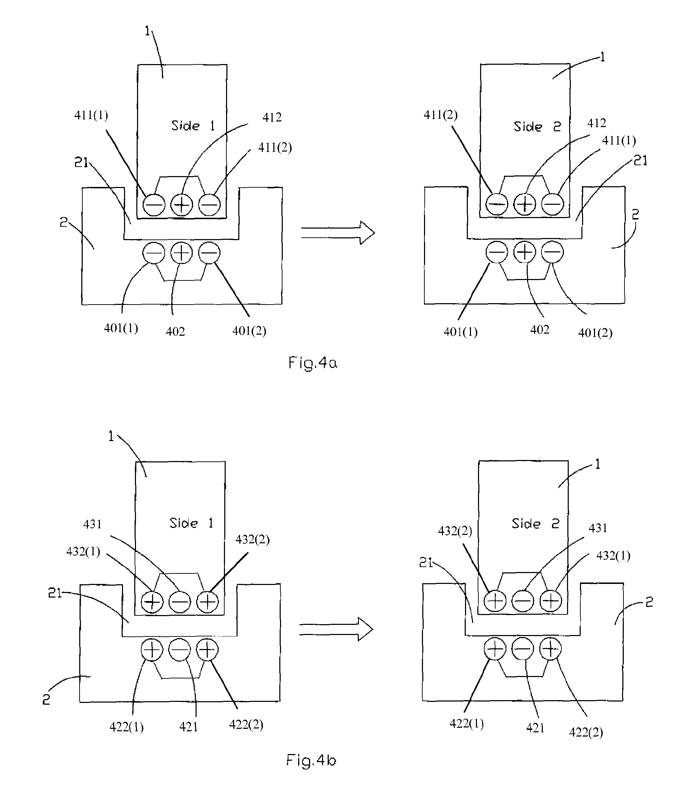

Fig.4a shows an applicable embodiment of the present invention, where both the device 1 and the charger 2 are provided with one positive pole 412, 402 and two negative poles 411(1),(2), 401(1),(2) corresponding to the each other. The positive polels 412, 4021 are positioned in the middle, and the negative poles 411(1),(2), 401(1),(2) are positioned at right or left sides in a centrosymmetrical way. It is conceivable that the position of the negative and positive poles are reversible while still satisfy the correct polarity, as seen in Fig.4b.

Fig.5 shows another applicable embodiment of the present invention, where both the device 1 and the charger 2 are provided with two pairs of negative poles 511(1),(2), 501(1),(2) and positive poles 512(1),(2), 502(1),(2) corresponding to the each other. As an example in this drawing, the negative poles 511(1),(2), 501(1),(2) are positioned in centrosymmetrical way centred by the geometrical axis of the device 1 and the charging slot 21 of the charger 2, and the positive poles 512(1),(2), 502(1),(2) are positioned in centrosymmetrical way either but out side the negative poles 511(1),(2), 501(1),(2). It is also conceivable that the position of the negative and positive poles are reversible while still satisfy the correct polarity.

However, it can be understood that one single parter of one pair of same poles of either the device 1 or the charger 2 can be absent without any effect to the electrical connection and the correct polarity. Therefore, the above two exemplary embodiments as shown in Figs. 4 and 5 are operative in the principle of the invention, although the preference of embodiments of the invention are as simple as possible, so as to reduce the cost of manufacture as much as possible.

Although the foregoing illustration for the above embodiments of the invention is given to the portable devices which include the battery, specially the Lithium battery and the likes, resided in a battery room of a housing, the device to be charged may also be the battery *per se.* Thus, the charger is suitable for replenishing the battery instead of a portable device to be charged, and therefore, a device to be energized by this the inventive battery is also an invention under the same concept.

Although the specific embodiment for connecting the device 1 and the charger 2 by the positive and negative poles is described above, one skilled in the art can recognize that the above example can not be considered as a limit of the invention, and the device 1 can be any powered device including the portable device and battery, and the charger 2 can also be any DC supplier including charger, battery, DC adaptor and so on. In addition, the slot can also be provided in the powered device for receiving the DC adaptor. Therefore, the invention can be used in any device connection as long as the correct polarity is required in different orientation of the devices.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A device to be powered by a DC supplier, wherein said device comprises:
a first pair of positive and negative poles for connecting with a pair of corresponding positive and negative poles of the DC supplier in a first orientation, so as to be powered by the DC supplier; and
at least one additional pole of positive or negative pole for combining with the first pair of positive and negative poles in a centrosymmetric way, to connect with the pair of corresponding positive and negative poles by a second pair of positive and negative poles of the combined poles, in a second orientation opposite to the first orientation, so as to be powered by the DC supplier.

2. The device according to claim 1, wherein the combined poles are arranged along one end of said device so that front and rear sides of said device are reversible while connecting with the DC supplier in different orientations.

3. The device according to claim 2, wherein the pair of corresponding positive and negative poles are provided in a slot of the DC supplier, for receiving the device in the first and second orientations during the connecting of the poles.

4. The device according to claim 2, wherein the poles of the device are provided in a slot for receiving the DC supplier in the first and second orientations during the connecting of the poles.

5. The device according to any one of claims 1 to 4, wherein the DC supplier is a charger, a battery, a DC adaptor and so on.

6. The device according to any one of claims 1 to 4, wherein the at least one additional pole is a additional positive pole, while the negative pole of the first pair of positive and negative poles is in the middle of the combined poles, and wherein:
the second pair of positive and negative poles is formed by the additional positive pole and a negative pole of the first pair of positive and negative poles.

7. The device according to any one of claims 1 to 4, wherein the at least one additional pole is a additional negative pole, while the positive pole of the first pair of positive and negative poles is in the middle of the combined poles, and wherein:
the second pair of positive and negative poles is formed by the additional negative pole and a positive pole of the first pair of positive and negative poles.

8. The device according to any one of claims 1 to 4, wherein the at least one additional pole is a additional pair of positive and negative poles, while two negative poles or two positive poles are in the middle of the combined two pairs of poles, and wherein:
the second pair of positive and negative poles is formed by the additional pair of positive pole and the negative poles.

9. The device according to any one of claims 1 to 4, wherein the at least one additional pole is electrically connected with the same polarity of the first pair of positive and negative poles respectively.

10. A DC supplier for supplying power to a powered device, wherein said supplier comprises:
a first pair of positive and negative poles for connecting with a pair of corresponding positive and negative poles of the powered device in a first orientation, so as to supplying power to the powered device; and
at least one additional pole of positive or negative pole for combining with the first pair of positive and negative poles in a centrosymmetric way, to connect with the pair of corresponding positive and the negative poles by a second pair of positive and negative poles of the combined poles, in a second orientation opposite to the first orientation, so as to supplying power to the powered device.

11. The DC supplier according to claim 10, wherein the combined poles are arranged along one end of said supplier so that front and rear sides of said supplier are reversible while connecting with the powered device in different orientations.

12. The DC supplier according to claim 11, wherein the pair of corresponding positive and negative poles are provided in a slot of the powered device, for receiving the DC supplier in the first and second orientations during the connecting of the poles.

13. The DC supplier according to claim 11, wherein the poles of the DC supplier are provided in a slot for receiving the powered device in the first and second orientations during the connecting of the poles.

14. The DC supplier according to any one of claims 10 to 13, wherein the powered device is portable device.

15. The DC supplier according to any one of claims 10 to 13, wherein the at least one additional pole is a additional positive pole, while the negative pole of the first pair of positive and negative poles is in the middle of the combined poles, and wherein:
the second pair of positive and negative poles is formed by the additional positive pole and a negative pole of the first pair of positive and negative poles.

16. The DC supplier according to any one of claims 10 to 13, wherein the at least one additional pole is a additional negative pole, while the positive pole of the first pair of positive and negative poles is in the middle of the combined poles, and wherein:
the second pair of positive and negative poles is formed by the additional negative pole and a positive pole of the first pair of positive and negative poles.

17. The DC supplier according to any one of claims 10 to 13, wherein the at least one additional pole is a additional pair of positive and negative poles, while two negative poles or two positive poles are in the middle of the combined two pairs of poles, and wherein:
the second pair of positive and negative poles is formed by the additional pair of positive pole and the negative poles.

18. The DC supplier according to any one of claims 10 to 13, wherein the at least one additional pole is electrically connected with the same polarity of the first pair of positive and negative poles respectively.
